(19) Europäisches Patentamt | European Patent Office | Office européen des brevets

(11) **EP 4 757 190 A1**

(12) **EUROPEAN PATENT APPLICATION**
published in accordance with Art. 153(4) EPC

(43) Date of publication:
**10.06.2026 Bulletin 2026/24**

(21) Application number: **24858348.6**

(22) Date of filing: **16.08.2024**

(51) International Patent Classification (IPC):
**H04B 1/40** (2015.01)

(52) Cooperative Patent Classification (CPC):
**H04B 1/40; H04W 24/04**

(86) International application number:
**PCT/CN2024/112861**

(87) International publication number:
**WO 2025/044805 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.08.2023 CN 202311099451**

(71) Applicant: **HUAWEI TECHNOLOGIES CO., LTD.
Shenzhen 518129 (CN)**

(72) Inventors:
• **LI, Hai**
  **Shenzhen, Guangdong 518129 (CN)**
• **JI, Kuiwen**
  **Shenzhen, Guangdong 518129 (CN)**
• **WANG, Shikang**
  **Shenzhen, Guangdong 518129 (CN)**
• **XIE, Yongfeng**
  **Shenzhen, Guangdong 518129 (CN)**

(74) Representative: **Isarpatent
Patent- und Rechtsanwälte Part G mbB
Friedrichstrasse 31
80801 München (DE)**

(54) **COMMUNICATION APPARATUS, MICROWAVE COMMUNICATION DEVICE, AND SYSTEM**

(57) This application relates to the field of microwave communication technologies, and provides a communication apparatus, a microwave communication device, and a system. The communication apparatus includes a first circuit board and a second circuit board. The first circuit board includes N1 service ports, M1 intermediate frequency ports, a first processing unit, and a first switching unit. The second circuit board includes N2 service ports, M2 intermediate frequency ports, a second processing unit, and a second switching unit. The M1 intermediate frequency ports or the M2 intermediate frequency ports are configured to connect to a second communication apparatus. In this way, the first circuit board and the second circuit board can be interchangeable active/standby circuit boards, so that active/standby protection can be implemented, and reliability of product application can be improved. In addition, because the first circuit board may be integrated with a service port, an intermediate frequency port, a processing unit, and a switching unit, and the second circuit board may be integrated with a service port, an intermediate frequency port, a processing unit, and a switching unit, that is, both the first circuit board and the second circuit board are integrated boards, integration can be effectively improved.

FIG. 6B

EP 4 757 190 A1

# Description

## CROSS-REFERENCE TO RELATED APPLICATIONS

This application claims priority to Chinese Patent Application No. 202311099451.0, filed with the China National Intellectual Property Administration on August 28, 2023 and entitled "COMMUNICATION APPARATUS, MICROWAVE COMMUNICATION DEVICE, AND SYSTEM", which is incorporated herein by reference in its entirety.

## TECHNICAL FIELD

This application relates to the field of microwave communication technologies, and in particular, to a communication apparatus, a microwave communication device, and a system.

## BACKGROUND

Microwave communication uses a microwave as a medium for communication, and does not require a solid medium. Microwave transmission can be used when there is no obstacle in a straight-line distance between two points. Microwave communication has a large capacity, good quality, and can have a long transmission distance. Therefore, the microwave communication is an important communication means of a communication network, and is also widely applicable to various dedicated communication networks.

Currently, a microwave communication system may include an indoor unit (indoor unit, IDU) and an outdoor unit (outdoor unit, ODU). The IDU may include a main control board and at least one intermediate frequency board. The main control board may include a plurality of service ports, where the service port is configured to receive and/or send a baseband signal (or service signal), and the intermediate frequency board may include a plurality of intermediate frequency ports, where the intermediate frequency port is configured to receive and/or send an intermediate frequency signal.

However, because the main control board aggregates all services, once the main control board is damaged, the accessed services in the entire microwave communication system cannot be normally transmitted.

## SUMMARY

Embodiments of this application provide a communication apparatus, a microwave communication device, and a system, to implement active/standby protection and improve reliability of product application.

According to a first aspect, an embodiment of this application provides a communication apparatus. The communication apparatus may be an IDU, or may be an apparatus including an IDU function, for example, an apparatus integrated with an IDU. The communication apparatus may include a first circuit board and a second circuit board. The first circuit board includes N1 service ports, M1 intermediate frequency ports, a first processing unit, and a first switching unit. The second circuit board includes N2 service ports, M2 intermediate frequency ports, a second processing unit, and a second switching unit. The M1 intermediate frequency ports or the M2 intermediate frequency ports are configured to connect to a second communication apparatus. The first circuit board is an active circuit board, and the second circuit board is a standby circuit board; or the second circuit board is an active circuit board, and the first circuit board is a standby circuit board.

In this way, since the first circuit board and the second circuit board can be interchangeable active/standby circuit boards, active/standby protection can be implemented, and reliability of product application can be improved. In addition, because the first circuit board may be integrated with a service port and an intermediate frequency port, and the second circuit board may be integrated with a service port and an intermediate frequency port, that is, both the first circuit board and the second circuit board are integrated boards, integration can be effectively improved.

In a possible design, the first circuit board and the second circuit board are connected through P buses, the P buses include P1 buses and P2 buses, the P1 buses are used by the first circuit board to send service data to the second circuit board, and the P2 buses are used by the second circuit board to send service data to the first circuit board, where P is less than 2*(M1+N1+M2+N2).

In this way, the first circuit board may send the service data to the second circuit board through the P1 buses. In other words, service data of different service ports and intermediate frequency ports on the first circuit board may be sent to the second circuit board (for example, sent to the switching unit of the second circuit board) through the P1 buses, and different service ports and intermediate frequency ports on the second circuit board may receive the service data from the first circuit board through the P1 buses (for example, receive the service data from the switching unit of the first circuit board). For example, if P1=1, the service data of different service ports and intermediate frequency ports on the first circuit board is sent to the second circuit board through a same bus, and different service ports and intermediate frequency ports on the second circuit board receive the service data from the first circuit board through the same bus. Therefore, in comparison with a manner in which "service data of different service ports and intermediate frequency ports on the first circuit board is separately sent to the second circuit board through different buses", in this manner, P1 may be less than M1+N1+M2+N2, and similarly, P2 may also be less than M1+N1+M2+N2. In other words, P may be less than 2*(M1+N1+M2+N2), thereby effectively reducing a quantity of cables and cabling space.

In a possible design, the P buses are serial buses.

In a possible design, a transmission bandwidth of the P1 buses is greater than or equal to a sum of transmission bandwidths corresponding to the N1 service ports and the M1 intermediate frequency ports; and/or a transmission bandwidth of the P2 buses is greater than or equal to a sum of transmission bandwidths corresponding to the N2 service ports and the M2 intermediate frequency ports.

For example, a maximum transmission bandwidth required by the first circuit board to send data to the second circuit board is a sum of the uplink transmission bandwidths corresponding to the N1 service ports and the M1 intermediate frequency ports, and the downlink transmission bandwidths corresponding to the N2 service ports and the M2 intermediate frequency ports. However, this may rarely occur in an actual scenario. When the N1 service ports and the M1 intermediate frequency ports perform uplink transmission, the N2 service ports and the M2 intermediate frequency ports also perform downlink transmission. Therefore, based on comprehensive consideration of the actual scenario and resource consumption, the transmission bandwidth of the P1 buses may be set to be greater than or equal to the sum of the transmission bandwidths corresponding to the N1 service ports and the M1 intermediate frequency ports. Similarly, the transmission bandwidth of the P2 buses may be set to be greater than or equal to the sum of the transmission bandwidths corresponding to the N2 service ports and the M2 intermediate frequency ports.

In a possible design, the second circuit board includes a transition unit, and the transition unit is configured to: receive first service data, and if it is determined that the first circuit board is an active circuit board and the second circuit board is a standby circuit board, send the first service data to the first circuit board through the P2 buses, where the first service data includes service data from the N2 service ports, and/or service data from the M2 intermediate frequency ports.

In this way, the transition unit is disposed, service data of a plurality of service ports and/or service data of a plurality of intermediate frequency ports can be all sent to the active circuit board through the P2 buses.

In a possible design, the first switching unit is configured to: receive the first service data, and if it is determined that a router port of the first service data is a port on the second circuit board, send the first service data to the second circuit board through the P1 buses.

In a possible design, the second circuit board further includes a first aggregation unit and/or a second aggregation unit. The first aggregation unit is configured to: aggregate the service data from the N2 service ports and send aggregated service data to the transition unit; and the second aggregation unit is configured to: aggregate the service data from the M2 intermediate frequency ports and send aggregated service data to the transition unit.

In a possible design, the first circuit board and the second circuit board are further connected through K buses, and the K buses are used for communication between the first processing unit and the second processing unit.

In this way, the K buses are disposed, so that the first processing unit and the second processing unit can directly communicate with each other. For example, the first processing unit may send a management command to the second processing unit, to manage the intermediate frequency port on the second circuit board, thereby facilitating reduction in a quantity of cables and cabling space.

In a possible design, the K buses are serial buses.

In a possible design, when the first circuit board is an active circuit board and the second circuit board is a standby circuit board, the K buses are used by the first processing unit to send a management command to the second processing unit; and the management command indicates a first-type parameter and/or a second-type parameter of the M2 intermediate frequency ports. The first-type parameter of the M2 intermediate frequency ports includes at least one of the following: a modulation scheme corresponding to the M2 intermediate frequency ports, a modulation bandwidth corresponding to the M2 intermediate frequency ports, and a transmit power of the M2 intermediate frequency ports; and the second-type parameter of the M2 intermediate frequency ports includes an operating state of the M2 intermediate frequency ports.

In this way, the management command sent by the first processing unit to the second processing unit may include a plurality of possible parameters, thereby achieving flexible implementation.

In a possible design, the first circuit board and the second circuit board are further connected through W buses, and the W buses include W1 buses and W2 buses. The W1 buses are used by the first processing unit to manage the M2 intermediate frequency ports, or the W2 buses are used by the second processing unit to manage the M1 intermediate frequency ports.

In a possible design, the W buses are parallel buses.

According to a second aspect, an embodiment of this application provides a microwave communication device. The microwave communication device includes the communication apparatus according to any possible design of the first aspect.

According to a third aspect, an embodiment of this application provides a microwave communication system. The microwave communication system includes a first communication apparatus and a second communication apparatus. The first communication apparatus is the communication apparatus according to any possible design of the first aspect. The second communication apparatus is configured to: receive a first intermediate frequency signal from an intermediate frequency port of the first communication apparatus, convert the first intermediate frequency signal into a first microwave signal, and send the first microwave signal; or receive a second microwave signal, convert the second microwave signal into a second intermediate frequency signal, and send the second intermediate frequency signal to the first communication apparatus.

BRIEF DESCRIPTION OF DRAWINGS

FIG. 1A is a diagram of a serial bus according to an embodiment of this application;

FIG. 1B is a diagram of a parallel bus according to an embodiment of this application;

FIG. 2 is a diagram of a microwave communication system according to an embodiment of this application;

FIG. 3 is a diagram of a structure of a first communication apparatus according to an embodiment of this application;

FIG. 4A is a diagram of a control plane when hot standby protection is performed on a main control board according to an embodiment of this application;

FIG. 4B is a diagram of a service plane when hot standby protection is performed on a main control board according to an embodiment of this application;

FIG. 4C is another diagram of a service plane when hot standby protection is performed on a main control board according to an embodiment of this application;

FIG. 5A is a diagram of a control plane of a communication apparatus according to Embodiment 1 of this application;

FIG. 5B is a diagram of a service plane of a communication apparatus according to Embodiment 1 of this application;

FIG. 5C is another diagram of a service plane of a communication apparatus according to Embodiment 1 of this application;

FIG. 6A is a diagram of a control plane of a communication apparatus according to Embodiment 2 of this application;

FIG. 6B is a diagram of a service plane of a communication apparatus according to Embodiment 2 of this application;

FIG. 6C is another diagram of a service plane of a communication apparatus according to Embodiment 2 of this application;

FIG. 6D is still another diagram of a service plane of a communication apparatus according to Embodiment 2 of this application; and

FIG. 7 is a diagram of a plurality of intermediate frequency units according to an embodiment of this application.

DESCRIPTION OF EMBODIMENTS

First, some terms in embodiments of this application are described, to help a person skilled in the art have a better understanding.

(1) Microwave communication

Microwave communication is a communication mode in which a microwave (microwave) is used for communication. The microwave is an electromagnetic wave whose frequency range is 300 megahertz (MHz) to 3 terahertz (THz), where 1 THz=1000 gigahertz (GHz), and a wavelength range of the microwave is 1 meter to 0.1 millimeter (Speed of light=Wavelength×Frequency). In other words, the microwave has a high frequency and a short wavelength.

(2) Dual fed and selective receiving

In a microwave communication system, to improve communication reliability, a 1+1 hot standby (hot standby, HSB) mode is usually chosen. In other words, two devices work at a same frequency, and only one device works. When the device is faulty, the other standby device takes over the work of the faulty device, thereby ensuring communication reliability.

In a hot standby system, a transmit side may duplicate one channel of signals to two channels of signals for output (that is, dual fed), and a receive side may select one of the two channels of signals for receiving (that is, selective receiving).

(3) Serial bus and parallel bus

A bus may be understood as a group of common information transmission lines that can be shared by a plurality of components in a time-based manner. Sharing means that the plurality of components may be mounted on the bus, and information exchanged between the components may be shared through the group of lines in a time-based manner. Time-based means that only one component is allowed to send information to the bus at a same moment; and if there are a plurality of components in a system, the components can send information to the bus only in a time-based manner.

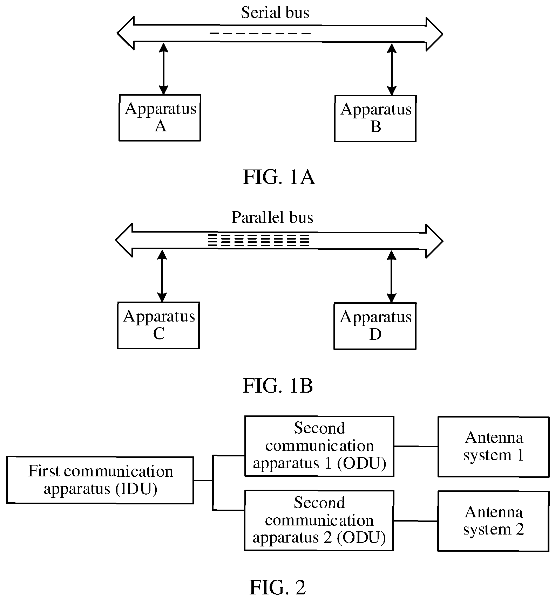

Based on different transmission formats, buses may be classified into a serial bus and a parallel bus. Refer to FIG. 1A. Information is transmitted between an apparatus A and an apparatus B through a serial bus. The serial bus transmits information in a serial manner (that is, data is transmitted bit by bit). Therefore, the serial bus needs only one signal line. Refer to FIG. 1B. Information is transmitted between an apparatus C and an apparatus D through a parallel bus. The parallel bus transmits information in a parallel manner (that is, a plurality of bits of data may be simultaneously transmitted). Therefore, the parallel bus needs to be implemented through a plurality of signal lines.

(4) Uplink transmission and downlink transmission

In embodiments of this application, transmitting service data from a switching chip to the outside may be defined as downlink transmission, and transmitting service data from the outside to the switching chip may be defined as uplink transmission.

FIG. 2 is a diagram of a microwave communication system according to an embodiment of this application. As shown in FIG. 2, the microwave communication system may include a first communication apparatus, one or more second communication apparatuses connected to the first communication apparatus, and a plurality of antenna systems respectively connected to the second communication apparatuses (FIG. 2 is illustrated by using an example in which the first communication apparatus is connected to two second communication apparatuses, namely, a second communication apparatus 1 and a second communication apparatus 2).

The first communication apparatus is connected to the second communication apparatus through an intermediate frequency (intermediate frequency, IF) cable, and the second communication apparatus is connected to the antenna system through a radio frequency cable. For example, the first communication apparatus may be an IDU, or may be an apparatus including an IDU function, for example, an apparatus integrated with an IDU; and the second communication apparatus may be an ODU, or may be an apparatus including an ODU function, for example, an apparatus integrated with an ODU.

In a first transmission direction, the first communication apparatus is configured to: modulate a baseband signal (or a service signal) from a transmission device, convert the baseband signal into an intermediate frequency signal, and send the intermediate frequency signal to the second communication apparatus through the intermediate frequency cable. The transmission device may be, for example, a router. The second communication apparatus is configured to convert the intermediate frequency signal into a microwave signal, amplify the microwave signal, and send the microwave signal through the antenna system.

In a second transmission direction, the antenna system sends a received microwave signal to the second communication apparatus, and the second communication apparatus converts the microwave signal into an intermediate frequency signal, and transfers the intermediate frequency signal to the first communication apparatus through the intermediate frequency cable. The first communication apparatus demodulates the intermediate frequency signal, converts the intermediate frequency signal into a baseband signal, and sends the baseband signal to the transmission device.

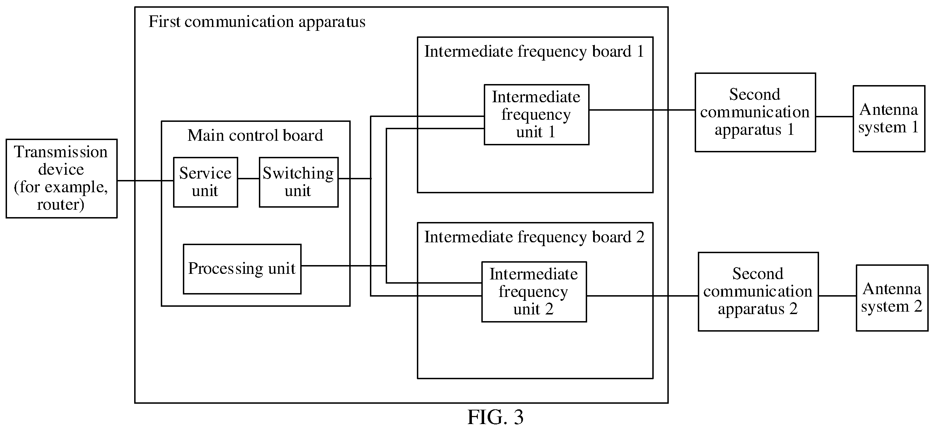

In the microwave communication system shown in FIG. 2, the first communication apparatus may include a main control board and at least one intermediate frequency board. As shown in FIG. 3, the first communication apparatus may include a main control board and two intermediate frequency boards (an intermediate frequency board 1 and an intermediate frequency board 2).

The main control board may include a service unit, a switching unit, and a processing unit. The service unit may include at least one service port (for example, N service ports). The service unit may be connected to the transmission device, or the N service ports may be connected to the transmission device. The service port may be, for example, an Ethernet (EtherNet, ETH) port. The switching unit is configured to: after receiving data, determine a data routing rule, and route the data to a corresponding port according to the data routing rule (for example, route data from a service port to a corresponding intermediate frequency port, and/or route data from an intermediate frequency port to a corresponding service port). The switching unit may also be referred to as a switching chip, for example, may be a field-programmable gate array (field-programmable gate array, FPGA) chip. The processing unit is configured to manage the two intermediate frequency boards. The processing unit may also be referred to as a processor, for example, may be a central processing unit (central processing unit, CPU).

The intermediate frequency board 1 may include an intermediate frequency unit 1, and the intermediate frequency unit 1 may include at least one modem and at least one intermediate frequency port (for example, M1 intermediate frequency ports). The intermediate frequency board 2 may include an intermediate frequency unit 2, and the intermediate frequency unit 2 may include at least one modem and at least one intermediate frequency port (for example, M2 intermediate frequency ports). The M1 intermediate frequency ports and the M2 intermediate frequency ports may be connected to different second communication apparatuses. For example, the M1 intermediate frequency ports are connected to a second communication apparatus 1, and the M2 intermediate frequency ports are connected to a second communication apparatus 2. The modem is configured to convert a baseband signal into an intermediate frequency signal or convert an intermediate frequency signal into a baseband signal. The intermediate frequency port may be in one-to-one correspondence with the modem, or one modem may correspond to a plurality of intermediate frequency ports. In this embodiment of this application, an example in which "the intermediate frequency port is in one-to-one correspondence with the modem" is used for description.

It can be learned from FIG. 3 that, the main control board aggregates all services. Once the main control board is damaged, the accessed services in an entire microwave communication system cannot be normally transmitted.

To resolve this problem, a possible solution is to protect the main control board by adding a main control board. If one main control board is damaged, the entire microwave communication system can still work normally. For example, hot standby is performed on the main control board, so that the service port can work normally if either an active main control board or a standby main control board is damaged.

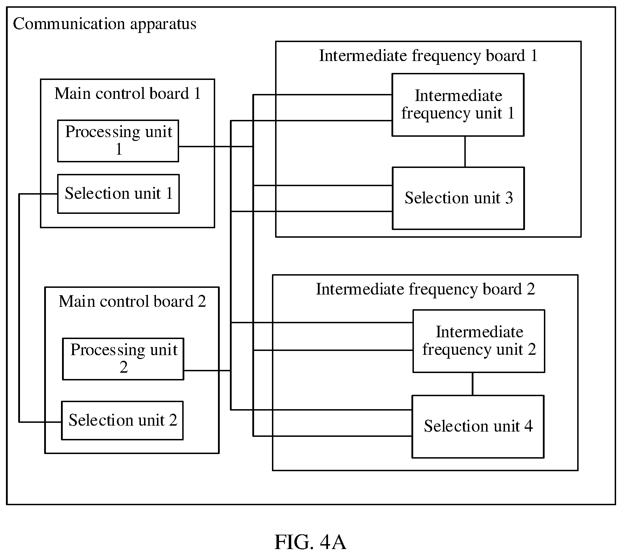

**FIG. 4A** is a diagram of a control plane when hot standby protection is performed on a main control board. As shown in FIG. 4A, a communication apparatus may include a main control board 1, a main control board 2, and at least one intermediate frequency board (for example, an intermediate frequency board 1 and an intermediate frequency board 2). One of the main control board 1 and the main control board 2 is an active main control board, and the other main control board is a standby main control board.

The main control board 1 may include a processing unit 1, and optionally, further include a selection unit 1. The main control board 2 may include a processing unit 2, and optionally, further include a selection unit 2. The selection unit 1 and the selection unit 2 may communicate with each other, to negotiate whether the main control board 1 is an active main control board or the main control board 2 is an active main control board. Either of the processing unit 1 and the processing unit 2 is connected to the intermediate frequency board 1 and the intermediate frequency board 2 (for example, the processing unit 1 and the processing unit 2 may be respectively connected to the intermediate frequency board 1 and the intermediate frequency board 2 through parallel buses). The intermediate frequency board 1 may include a selection unit 3, and the selection unit 3 is configured to indicate the intermediate frequency board 1 to follow a management command of the active main control board. The intermediate frequency board 2 includes a selection unit 4, and the selection unit 4 is configured to indicate the intermediate frequency board 2 to follow the management command of the active main control board.

For example, the selection unit 1 and the selection unit 2 determine, through negotiation, that the main control board 1 is an active main control board and the main control board 2 is a standby main control board. The selection unit 1 may notify the processing unit 1 that "the main control board 1 is an active main control board and the main control board 2 is a standby main control board", and the selection unit 2 may notify the processing unit 2 that "the main control board 1 is an active main control board and the main control board 2 is a standby main control board". Further, the processing unit 1 may separately notify the selection unit 3 and the selection unit 4 that "the active main control board is the main control board 1 and the main control board 2 is a standby main control board", so that the selection unit 3 may indicate the intermediate frequency board 1 to follow a management command of the main control board 1, and the selection unit 4 may indicate the intermediate frequency board 2 to follow the management command of the main control board 1.

In other words, in the structure shown in FIG. 4A, the intermediate frequency board 1 and the intermediate frequency board 2 are controlled by a processing unit on the active main control board. For example, when some basic configurations (for example, a modulation scheme and a modulation bandwidth corresponding to an intermediate frequency port) need to be performed on the intermediate frequency board 1 and the intermediate frequency board 2, if the main control board 1 is an active main control board, the processing unit 1 separately performs basic configurations on the intermediate frequency board 1 and the intermediate frequency board 2.

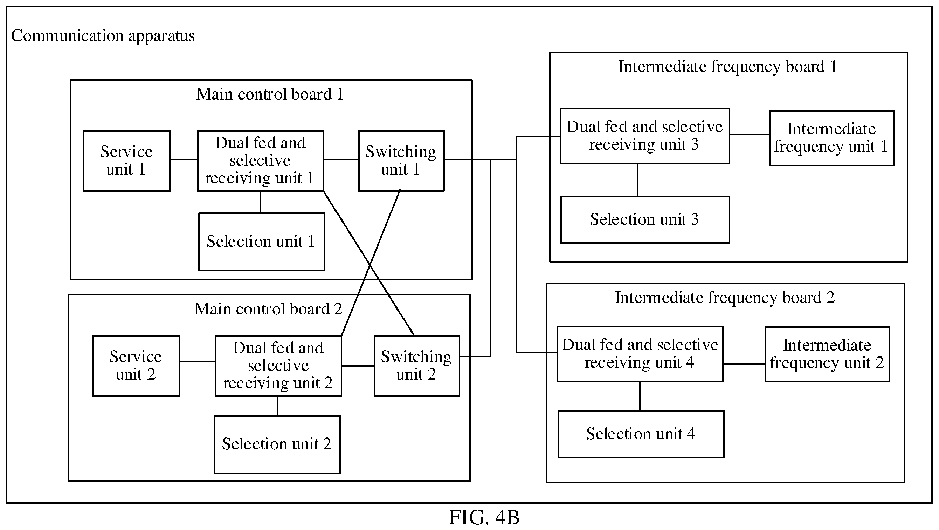

**FIG. 4B** is a diagram of a service plane when hot standby protection is performed on a main control board. As shown in FIG. 4B, a communication apparatus may include a main control board 1, a main control board 2, and at least one intermediate frequency board (for example, an intermediate frequency board 1 and an intermediate frequency board 2). One of the main control board 1 and the main control board 2 is an active main control board, and the other main control board is a standby main control board.

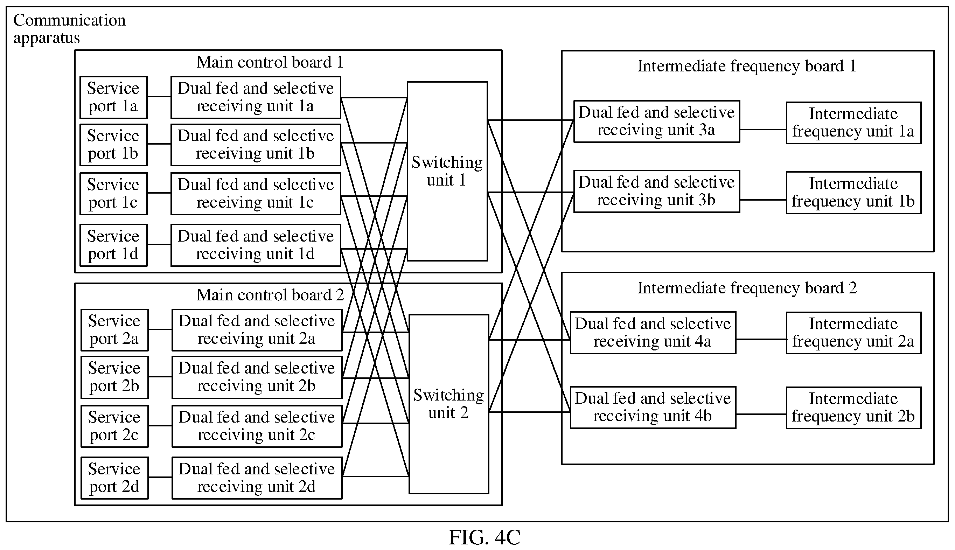

The main control board 1 may include a service unit 1 (for example, including N1 service ports), a dual fed and selective receiving unit 1, and a switching unit 1. The main control board 2 may include a service unit 2 (for example, including N2 service ports), a dual fed and selective receiving unit 2, and a switching unit 2. The intermediate frequency board 1 may include a dual fed and selective receiving unit 3, and the intermediate frequency board 2 may include a dual fed and selective receiving unit 4. It may be understood that the service port may be in one-to-one correspondence with a dual fed and selective receiving unit, and an intermediate frequency port may also be in one-to-one correspondence with the dual fed and selective receiving unit. For example, the main control board 1 may include N1 dual fed and selective receiving units corresponding to the N1 service ports. In this embodiment of this application, FIG. 4B shows only the dual fed and selective receiving unit 1. In addition, for a more specific example, refer to FIG. 4C. FIG. 4C is illustrated by using an example in which a main control board 1 includes four service ports, a main control board 2 includes four service ports, an intermediate frequency board 1 includes two intermediate frequency ports, and an intermediate frequency board 2 includes two intermediate frequency ports.

FIG. 4B is used as an example. **In the first transmission direction** (that is, from the service port to the intermediate frequency port), the main control board 1 may separately send a baseband signal to the intermediate frequency board 1 and the intermediate frequency board 2, and the main control board 2 may also separately send a baseband signal to the intermediate frequency board 1 and the intermediate frequency board 2. In other words, the dual fed and selective receiving unit 3 of the intermediate frequency board 1 receives the baseband signals from the main control board 1 and the main control board 2, and the dual fed and selective receiving unit 4 of the intermediate frequency board 2 receives the baseband signals from the main control board 1 and the main control board 2.

When the main control board 1 is an active main control board and the main control board 2 is a standby main control board, the processing unit 1 of the main control board 1 may separately notify the selection unit 3 and the selection unit 4 that "the active main control board is the main control board 1". Further, the selection unit 3 may indicate the dual fed and selective receiving unit 3 to send the baseband signal of the main control board 1 to a modem 1 after receiving the baseband signals of the main control board 1 and the main control board 2, that is, selectively receive the baseband signal of the main control board 1. The selection unit 4 may indicate the dual fed and selective receiving unit 2 to send the baseband signal of the main control board 1 to a modem 2 after receiving the baseband signals of the main control board 1 and the main control board 2, that is, selectively receive the baseband signal of the main control board 1.

**In the second transmission direction** (that is, from the intermediate frequency port to the service port), when the main control board 1 is an active main control board and the main control board 2 is a standby main control board, the intermediate frequency board 1 may separately send a baseband signal to the switching unit 1 of the main control board 1 and the switching unit 2 of the main control board 2. After receiving the baseband signals of the intermediate frequency board 1, the switching unit 1 and the switching unit 2 send the baseband signals of the intermediate frequency board 1 to the dual fed and selective receiving unit 1 of the main control board 1 and/or the dual fed and selective receiving unit 1 of the main control board 2 according to a data routing rule (for example, if data from an intermediate frequency port 1 needs to be routed to a service port of the service unit 1, the data may be sent to the dual fed and selective receiving unit 1; and if the data from the intermediate frequency port 1 needs to be routed to a service port of the service unit 2, the data may be sent to the dual fed and selective receiving unit 2). The intermediate frequency board 2 may separately send a baseband signal to the switching unit 1 of the main control board 1 and the switching unit 2 of the main control board 2. After receiving the baseband signals of the intermediate frequency board 2, the switching unit 1 and the switching unit 2 send the baseband signals of the intermediate frequency board 2 to the dual fed and selective receiving unit 1 of the main control board 1 and/or the dual fed and selective receiving unit 2 of the main control board 2 according to a data routing rule.

The selection unit 1 may notify the dual fed and selective receiving unit 1 that "the active main control board is the main control board 1", and the selection unit 2 may notify the dual fed and selective receiving unit 2 that "the active main control board is the main control board 1". Further, after receiving the baseband signals from the switching unit 1 and the switching unit 2, the dual fed and selective receiving unit 1 may send the baseband signal from the switching unit 1 to the service unit 1 (that is, selectively receive the baseband signal from the switching unit 1). After receiving the baseband signals from the switching unit 1 and the switching unit 2, the dual fed and selective receiving unit 2 may send the baseband signal from the switching unit 1 to the service unit 2 (that is, selectively receive the baseband signal from the switching unit 1).

It may be understood that FIG. 4A focuses on units related to the control plane, and FIG. 4B focuses on units related to the service plane. The first communication apparatus may include the units shown in FIG. 4A and the units shown in FIG. 4B.

In FIG. 4A and FIG. 4B, the main control board and the intermediate frequency board are separately disposed. Consequently, after an active/standby protection solution is introduced, a quantity of boards is large.

Based on this, an embodiment of this application provides a communication apparatus, configured to integrate a main control board and an intermediate frequency board, and perform active/standby protection on an integrated board. In this way, reliability of product application can be improved while integration is improved and a quantity of boards is reduced. The communication apparatus provided in embodiments of this application may be an IDU, or may be an apparatus including an IDU function, for example, an apparatus integrated with an IDU.

Specifically, the communication apparatus (referred to as a first communication apparatus) provided in embodiments of this application may include a first circuit board and a second circuit board. The first circuit board and the second circuit board are interchangeable active/standby circuit boards. To be specific, the first circuit board is an active circuit board, and the second circuit board is a standby circuit board; or the second circuit board is an active circuit board, and the first circuit board is a standby circuit board. The first circuit board includes a service unit 1 (including N1 service ports), an intermediate frequency unit 1 (M1 intermediate frequency ports), a first processing unit, and a first switching unit. In other words, the first circuit board is an integrated board integrating the service port, the intermediate frequency port, the processing unit, and the switching unit. For example, the first circuit board may be an integrated board of a main control board 1 and an intermediate frequency board 1. The second circuit board includes a service unit 2 (including N2 service ports), an intermediate frequency unit 2 (including M2 intermediate frequency ports), a second processing unit, and a second switching unit. In other words, the second circuit board is an integrated board integrating the service port, the intermediate frequency port, the processing unit, and the switching unit. For example, the first circuit board may be an integrated board of a main control board 2 and an intermediate frequency board 2.

The M1 intermediate frequency ports or the M2 intermediate frequency ports are configured to connect to a second communication apparatus. For example, at least one intermediate frequency port of the M1 intermediate frequency ports or the M2 intermediate frequency ports is configured to receive data from a first service port and send the data to the second communication apparatus (for example, an ODU), and the first service port is a service port among the N1 service ports and the N2 service ports. The N1 service ports or the N2 service ports are configured to connect to a transmission device. For example, at least one service port of the N1 service ports or the N2 service ports is configured to receive data from a first intermediate frequency port and send the data to the transmission device, and the first intermediate frequency port is an intermediate frequency port among the M1 intermediate frequency ports and the M2 intermediate frequency ports. In other words, in a first transmission direction, data of one service port may be routed to one or more intermediate frequency ports, and then transmitted to the second communication apparatus; and in a second transmission direction, data of one intermediate frequency port may be routed to one or more service ports, and then transmitted to the transmission device.

The following separately describes a specific structure of the communication apparatus through Embodiment 1 and Embodiment 2.

## Embodiment 1

In Embodiment 1, a manner of communication between a first circuit board and a second circuit board may follow manners shown in FIG. 4A and FIG. 4B.

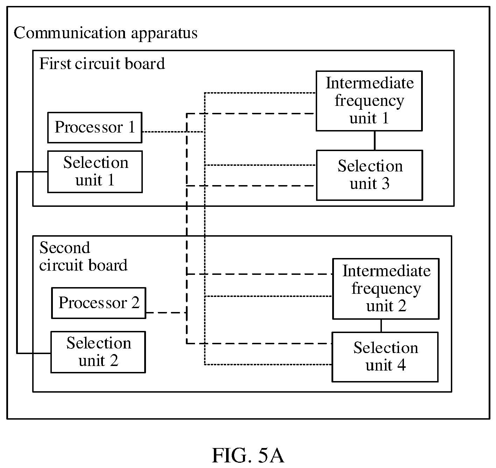

**FIG. 5A** is a diagram of a control plane of a communication apparatus according to an embodiment of this application. As shown in FIG. 5A, the communication apparatus may include a first circuit board and a second circuit board. The first circuit board includes a processing unit 1, an intermediate frequency unit 1, a selection unit 1, and a selection unit 3. The second circuit board includes a processing unit 2, an intermediate frequency unit 2, a selection unit 2, and a selection unit 3. In this case, the first circuit board and the second circuit board are further connected through W buses, and the W buses are parallel buses. The W buses include W1 buses and W2 buses. The W1 buses are used by the processing unit 1 to manage M2 intermediate frequency ports, and the W2 buses are used by the processing unit 2 to manage M1 intermediate frequency ports. For specific implementation of communication between the units, refer to the descriptions in FIG. 4A and FIG. 4B.

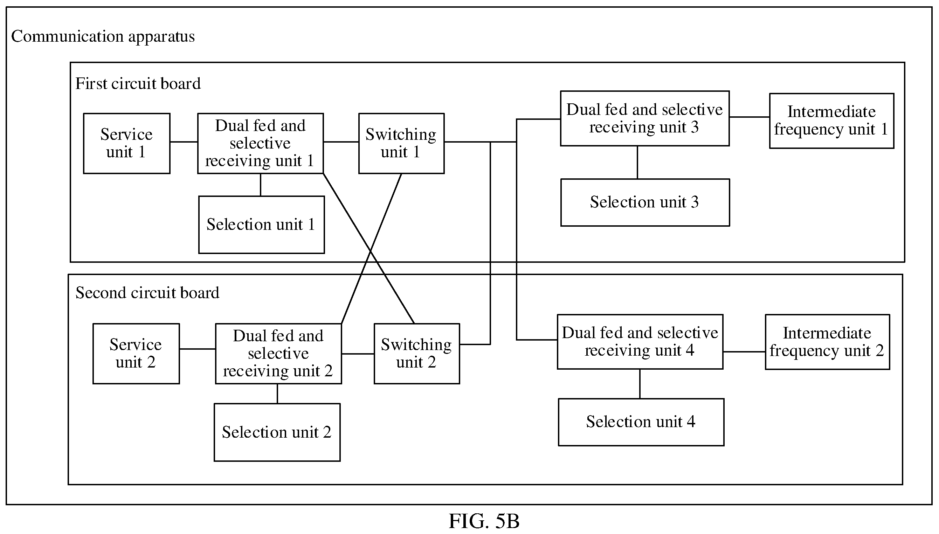

**FIG. 5B** is a diagram of a service plane of a communication apparatus according to an embodiment of this application. As shown in FIG. 5B, the communication apparatus may include a first circuit board and a second circuit board. The first circuit board may include a service unit 1, a dual fed and selective receiving unit 1, a switching unit 1, and a dual fed and selective receiving unit 3. The second circuit board may include a service unit 2, a dual fed and selective receiving unit 2, a switching unit 2, and a dual fed and selective receiving unit 4. For specific implementation of communication and data transmission between the units, refer to the descriptions in FIG. 4A and FIG. 4B.

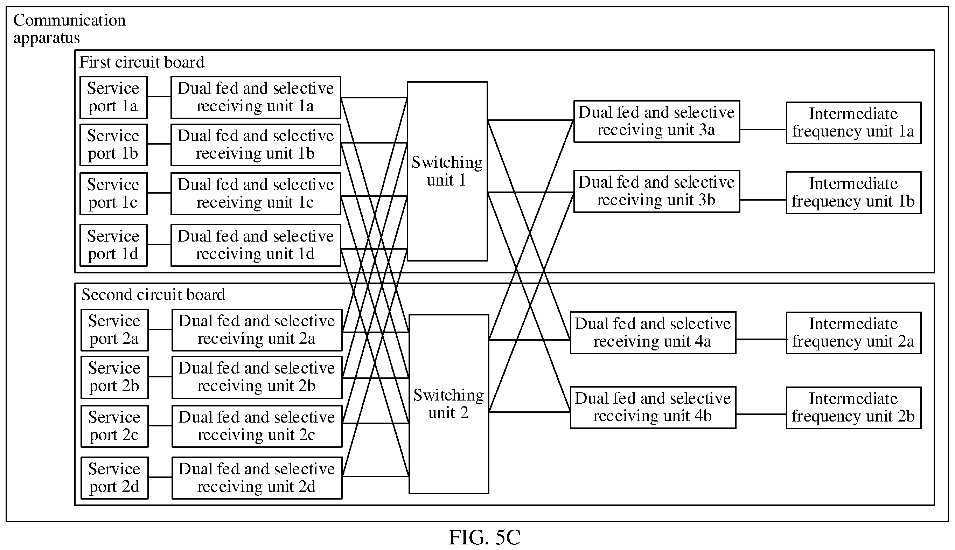

In addition, in consideration of bidirectional transmission, at least 2*(M1+N1+M2+N2) buses (the bus may be a serial bus) are required between the first circuit board and the second circuit board. Similar to FIG. 4C, FIG. 5C shows a bus used for data transmission between two circuit boards when an integrated board is used. It can be learned from FIG. 5C that, when the first circuit board includes four service ports and two intermediate frequency ports, and the second circuit board includes four service ports and two intermediate frequency ports, in consideration of bidirectional transmission, at least 2*(4+2+4+2)=24 buses are required between the first circuit board and the second circuit board.

It may be understood that, in general, a maximum transmission bandwidth of each bus is 25 Gbps, or 25 Gigabit Ethernet (Gigabit Ethernet, GE). For example, if both uplink and downlink transmission bandwidths required by a service port 1a are 10 GE (less than 25 GE), two inter-board buses (that is, the service port 1a is connected to the switching unit 2 through two buses) may be set for the service port 1a, where one bus is used by the service port 1a to transmit data to the switching unit 2 (that is, uplink transmission), and the other bus is used by the switching unit 2 to transmit data to the service port 1a (that is, downlink transmission).

## Embodiment 2

Compared with Embodiment 1, in Embodiment 2, a manner of communication between a first circuit board and a second circuit board is improved, so that a quantity of cables and cabling space can be effectively reduced, and costs can be reduced.

For a control plane, the first circuit board and the second circuit board may be connected through K buses, and the K buses are used for communication between a processing unit 1 and a processing unit 2. The K buses may be serial buses. For example, K is equal to 1, that is, the processing unit 1 and the processing unit 2 communicate with each other through one serial bus.

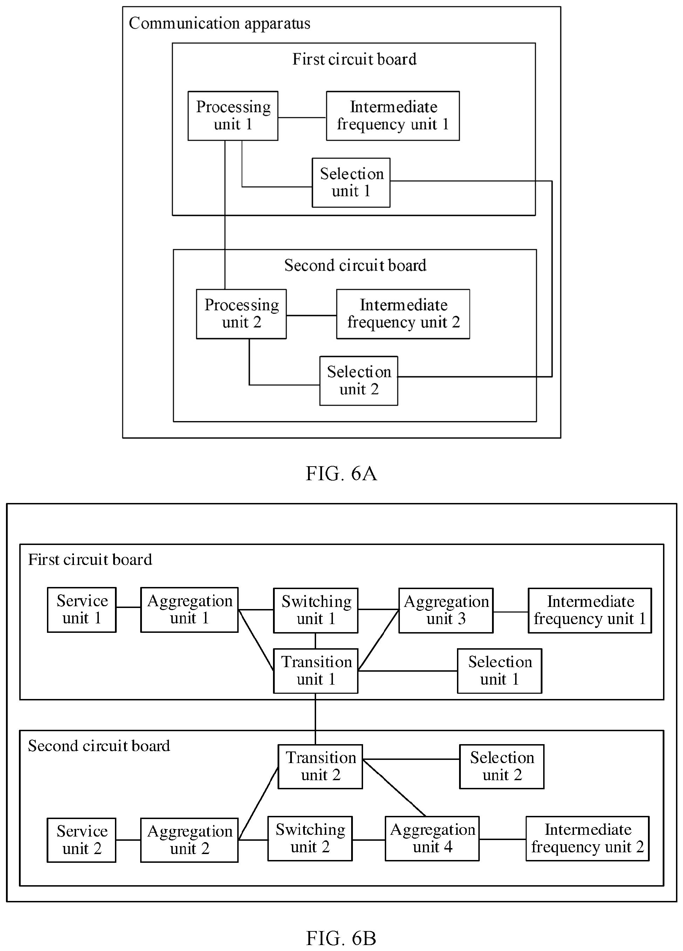

**FIG. 6A** is a diagram of a control plane of a communication apparatus according to an embodiment of this application. As shown in FIG. 6A, the communication apparatus may include a first circuit board and a second circuit board. The first circuit board includes a processing unit 1, an intermediate frequency unit 1, and a selection unit 1. The processing unit 1 is connected to the intermediate frequency unit 1 (different from Embodiment 1, the processing unit 1 does not need to be connected to an intermediate frequency unit 2). The second circuit board includes a processing unit 2, the intermediate frequency unit 2, and a selection unit 2. The processing unit 2 is connected to the intermediate frequency unit 2 (different from Embodiment 1, the processing unit 2 does not need to be connected to the intermediate frequency unit 1). For implementation of the selection unit 1 and the selection unit 2, refer to the foregoing descriptions.

For example, the selection unit 1 and the selection unit 2 determine, through negotiation, that the first circuit board is an active circuit board and the second circuit board is a standby circuit board. The processing unit 1 may send a management command to the processing unit 2 through the K buses, and the management command indicates a first-type parameter and/or a second-type parameter of M2 intermediate frequency ports. The first-type parameter of the M2 intermediate frequency ports includes at least one of the following: a modulation scheme corresponding to the M2 intermediate frequency ports (that is, a modulation scheme used by a modem corresponding to each of the M2 intermediate frequency ports), a modulation bandwidth corresponding to the M2 intermediate frequency ports, and a transmit power of the M2 intermediate frequency ports. The second-type parameter of the M2 intermediate frequency ports includes an operating state of the M2 intermediate frequency ports, for example, the operating state is enabled or disabled.

A specific application scenario in which "the processing unit 1 sends the second-type parameter of the M2 intermediate frequency ports to the processing unit 2" is not limited in this embodiment of this application. For example, when the intermediate frequency unit 1 (that is, the M1 intermediate frequency ports) and the intermediate frequency unit 2 (that is, the M2 intermediate frequency ports) operate in a space diversity manner (that is, the intermediate frequency unit 1 and the intermediate frequency unit 2 transmit same data), if the processing unit 1 configures an operating state of the intermediate frequency unit 1 as enabled and an operating state of the intermediate frequency unit 2 as disabled, when an exception occurs in the intermediate frequency unit 1, the processing unit 1 may send the management command to the processing unit 2, to set the operating state of the intermediate frequency unit 2 as enabled.

Specifically, the processing unit 1 may configure the M1 intermediate frequency ports based on the first-type parameter of the M1 intermediate frequency ports, and the processing unit 2 may configure the M2 intermediate frequency ports based on the first-type parameter of the M2 intermediate frequency ports. When determining that the second-type parameter of the M2 intermediate frequency ports needs to be modified, the processing unit 1 may send the management command to the processing unit 2 through the K buses. In other words, for some basic configurations (different from real-time configurations), the processing unit 1 and the processing unit 2 may each perform some basic configurations on intermediate frequency ports on respective boards; and for some real-time configurations, the processing unit 1 may send the management command to the processing unit 2 in real time to control the M2 intermediate frequency ports. In this way, in FIG. 4A, one processing unit separately configures intermediate frequency ports on two intermediate frequency boards, that is, the processing unit first configures an intermediate frequency port on one intermediate frequency board, and then configures an intermediate frequency port on the other intermediate frequency board. However, in FIG. 6A, when the processing unit 1 performs basic configurations on the M1 intermediate frequency ports, the processing unit 2 may perform basic configurations on the M2 intermediate frequency ports, so that configuration efficiency can be effectively improved. In addition, a quantity of cables and cabling space may be reduced (the processing unit 1 does not need to be connected to the intermediate frequency unit 2, and the processing unit 2 does not need to be connected to the intermediate frequency unit 1).

It may be understood that, in another possible example, the processing unit 1 may alternatively send the first-type parameter of the M2 intermediate frequency ports to the processing unit 2 through the K buses, so that the processing unit 2 configures the M2 intermediate frequency ports after receiving the first-type parameter of the M2 intermediate frequency ports.

For a service plane, the first circuit board and the second circuit board are connected through P buses, and the P buses may be serial buses (for example, high-speed serial buses). The P buses include P1 buses and P2 buses. The P1 buses are used by the first circuit board to send service data to the second circuit board, and the P2 buses are used by the second circuit board to send service data to the first circuit board. P is less than 2* (M1+N1+M2+N2). P1 is less than M1+N1+M2+N2, and P2 is less than M1+N1+M2+N2.

In embodiments of this application, a transmission bandwidth of the P1 buses and a transmission bandwidth of the P2 buses are not limited, provided that a requirement of an actual scenario can be met. If the transmission bandwidth of the P1 buses and the transmission bandwidth of the P2 buses are set to excessively large values, a resource waste may be caused. For example, a maximum transmission bandwidth required by the first circuit board to send data to the second circuit board is a sum of uplink transmission bandwidths corresponding to N1 service ports and the M1 intermediate frequency ports, and downlink transmission bandwidths corresponding to N2 service ports and the M2 intermediate frequency ports. However, this may rarely occur in an actual scenario. When the N1 service ports and the M1 intermediate frequency ports perform uplink transmission, the N2 service ports and the M2 intermediate frequency ports also perform downlink transmission. Therefore, based on comprehensive consideration of the actual scenario and resource consumption, the transmission bandwidth of the P1 buses may be set to be greater than or equal to a sum of the transmission bandwidths corresponding to the N1 service ports and the M1 intermediate frequency ports. Similarly, the transmission bandwidth of the P2 buses may be set to be greater than or equal to a sum of the transmission bandwidths corresponding to the N2 service ports and the M2 intermediate frequency ports.

In addition, the P1 buses are used as an example. A maximum transmission bandwidth of each bus may be 25 GE. If the sum of the transmission bandwidths corresponding to the N1 service ports and the M1 intermediate frequency ports is 20 GE (that is, within a range of (0, 25 GE]), P1 may be equal to 1. If the sum of the transmission bandwidths corresponding to the N1 service ports and the M1 intermediate frequency ports is 40 GE (that is, within a range of (25 GE, 50 GE]), P1 may be equal to 2. If the sum of the transmission bandwidths corresponding to the N1 service ports and the M1 intermediate frequency ports is 70 GE (that is, within a range of (50 GE, 75 GE]), P1 may be equal to 3. The rest can be deduced by analogy.

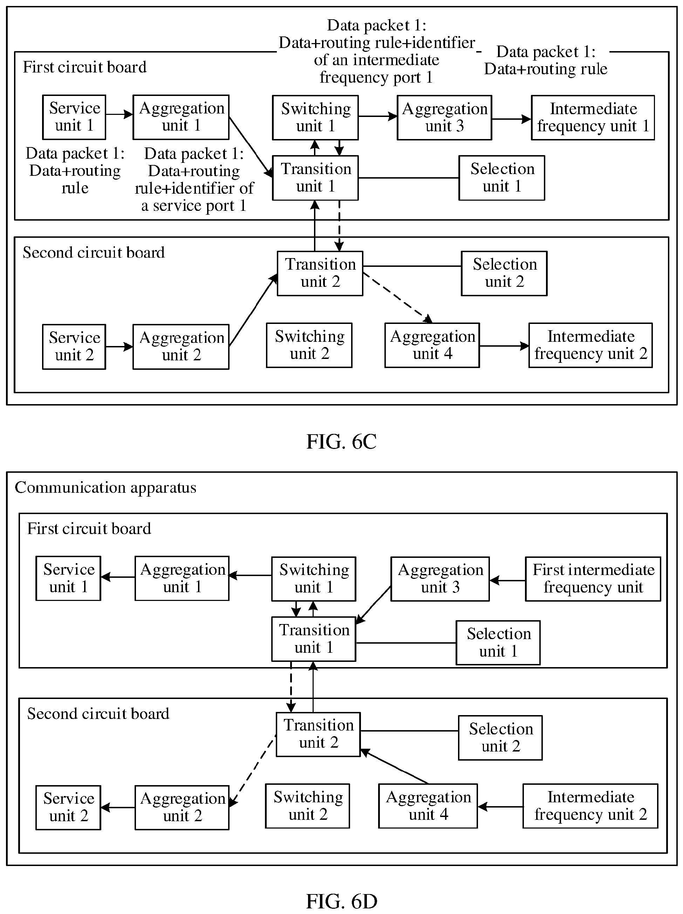

**FIG. 6B to FIG. 6D** are diagrams of a service plane of a communication apparatus according to an embodiment of this application. FIG. 6B is used to show a connection relationship between different units, FIG. 6C is used to show service data transmission in a first transmission direction, and FIG. 6D is used to show service data transmission in a second transmission direction. As shown in FIG. 6B, the communication apparatus may include a first circuit board and a second circuit board. The first circuit board includes a service unit 1, an aggregation unit 1, a switching unit 1, a transition unit 1, an aggregation unit 3, and an intermediate frequency unit 1. The second circuit board includes a service unit 2, an aggregation unit 2, a switching unit 2, a transition unit 2, an aggregation unit 4, and an intermediate frequency unit 2.

In addition, the selection unit 1 may communicate with the transition unit 1, and the selection unit 2 may communicate with the transition unit 2. For example, after the selection unit 1 and the selection unit 2 determine, through negotiation, that the first circuit board is an active circuit board and the second circuit board is a standby circuit board, the selection unit 1 may notify the transition unit 1 that "the first circuit board is an active circuit board and the second circuit board is a standby circuit board", and the selection unit 2 may notify the transition unit 2 that "the first circuit board is an active circuit board and the second circuit board is a standby circuit board". Further, after receiving service data from the aggregation unit 1 or the aggregation unit 3, the transition unit 1 may send the service data to the switching unit 1. After receiving service data from the aggregation unit 2 or the aggregation unit 4, the transition unit 2 may send the service data to the transition unit 1, and the transition unit 1 sends the service data to the switching unit 1.

The following describes service data transmission in the first transmission direction and the second transmission direction by using an example in which "the first circuit board is an active circuit board and the second circuit board is a standby circuit board".

Refer to **FIG. 6C. In the first transmission direction** (that is, from a service port to an intermediate frequency port), service data of N1 service ports is aggregated by the aggregation unit 1 (where a data packet 1 of a service port 1 is used as an example, the aggregation unit 1 may add an aggregation packet header to the data packet 1 of the service port 1, and the aggregation packet header may include an identifier of the service port 1), and then is sent to the transition unit 1. After determining that the first circuit board is an active circuit board and the second circuit board is a standby circuit board, the transition unit 1 may send aggregated service data to the switching unit 1.

Service data of the N2 service ports is aggregated by the aggregation unit 2 and then sent to the transition unit 2. After determining that the first circuit board is an active circuit board and the second circuit board is a standby circuit board, the transition unit 2 may send aggregated service data to the transition unit 1 through P2 buses, and then the transition unit 1 may send the aggregated service data to the switching unit 1.

After receiving aggregated service data (which may include the service data of the N1 service ports and the service data of the N2 service ports), the switching unit 1 may send the service data to the aggregation unit 3 and/or the transition unit 1 according to a data routing rule. For example, the switching unit 1 determines, according to a routing rule of the data packet 1, that an intermediate frequency port corresponding to the data packet 1 is an intermediate frequency port 1 (the intermediate frequency port 1 belongs to M1 intermediate frequency ports). Further, the switching unit 1 may change the identifier of the service port in the aggregation packet header of the data packet 1 to an identifier of the intermediate frequency port 1, and send the data packet 1 to the aggregation unit 3. Further, after receiving the data packet 1, the aggregation unit 3 may parse the aggregation packet header, and send the data packet 1 to the intermediate frequency port 1 based on the identifier of the intermediate frequency port 1 included in the aggregation packet header. Further, the intermediate frequency port 1 sends the data packet 1 to a second communication apparatus (that is, an ODU). For example, a data packet may include a routing rule of the data packet, and the switching unit 1 may parse the data packet to obtain the routing rule.

For another example, the switching unit 1 determines, according to a routing rule of a data packet 2, that an intermediate frequency port corresponding to the data packet 2 is an intermediate frequency port 2 (the intermediate frequency port 2 belongs to M2 intermediate frequency ports). Further, the switching unit 1 may change an identifier of a service port in an aggregation packet header of the data packet 2 to an identifier of the intermediate frequency port 2, and send the data packet 2 to the transition unit 1. Further, the transition unit 1 sends the data packet 2 to the transition unit 2, and the transition unit 2 sends the data packet 2 to the aggregation unit 4. After receiving the data packet 2, the aggregation unit 4 may parse the aggregation packet header, and send the data packet 2 to the intermediate frequency port 2 based on the identifier of the intermediate frequency port 2 included in the aggregation packet header. Further, the intermediate frequency port 2 sends the data packet 2 to a second communication apparatus.

Refer to **FIG. 6D. In the second transmission direction** (that is, from the intermediate frequency port to the service port), service data of the M1 intermediate frequency ports is aggregated by the aggregation unit 3 (where a data packet 3 of the intermediate frequency port 1 is used as an example, the aggregation unit 3 may add an aggregation packet header to the data packet 3 of the intermediate frequency port 1, and the aggregation packet header may include the identifier of the intermediate frequency port 1), and then is sent to the transition unit 1. After determining that the first circuit board is an active circuit board and the second circuit board is a standby circuit board, the transition unit 1 may send aggregated service data to the switching unit 1.

Service data of the M2 intermediate frequency ports is aggregated by the aggregation unit 4 and then sent to the transition unit 2. After determining that the first circuit board is an active circuit board and the second circuit board is a standby circuit board, the transition unit 2 may send aggregated service data to the transition unit 1 through P1 buses, and then the transition unit 1 may send the aggregated service data to the switching unit 1.

After receiving aggregated service data, the switching unit 1 may send the data to the aggregation unit 1 and/or the transition unit 1 according to a data routing rule. For example, the switching unit 1 determines, according to a routing rule of the data packet 3, that a service port corresponding to the data packet 3 is the service port 1 (the service port 1 belongs to the N1 service ports). Further, the switching unit 1 may change the identifier of the intermediate frequency port in the aggregation packet header of the data packet 3 to the identifier of the service port 1, and send the data packet 3 to the aggregation unit 1. Further, after receiving the data packet 3, the aggregation unit 1 may parse the aggregation packet header, and send the data packet 1 to the service port 1 based on the identifier of the service port 1 included in the aggregation packet header. Further, the service port 1 sends the data packet 3 to a transmission device.

For another example, the switching unit 1 determines, according to a routing rule of a data packet 4, that a service port corresponding to the data packet 4 is a service port 2 (the service port 2 belongs to the N2 service ports). Further, the switching unit 1 may change an identifier of an intermediate frequency port in an aggregation packet header of the data packet 4 to an identifier of the service port 2, and send the data packet 4 to the transition unit 1. Further, the transition unit 1 sends the data packet 4 to the transition unit 2, and the transition unit 2 sends the data packet 4 to the aggregation unit 2. After receiving the data packet 4, the aggregation unit 2 may parse the aggregation packet header, and send the data packet 4 to the service port 2 based on the identifier of the service port 2 included in the aggregation packet header. Further, the service port 2 sends the data packet 2 to a transmission device.

In addition, it may be understood that, after the selection unit 1 and the selection unit 2 determine, through negotiation, that the first circuit board is an active circuit board and the second circuit board is a standby circuit board, if hardware of the first circuit board fails, the selection unit 1 and the selection unit 2 may determine, through negotiation, that the second circuit board is an active circuit board and the first circuit board is a standby circuit board. In addition, on the control plane, the second circuit board may perform listening through the K buses, and remove, before the first circuit board recovers to normal, a service that needs to be configured across boards. On the service plane, the second circuit board no longer receives service data of the first circuit board, but performs switching on service data of the second circuit board (and another board).

It can be learned from the foregoing descriptions of FIG. 6B to FIG. 6D that the first circuit board is used as an example. In comparison with the first circuit board in Embodiment 1, the first circuit board in Embodiment 2 is added with the aggregation unit and the transition unit, and does not need to be disposed with the dual fed and selective receiving unit. In Embodiment 2, an aggregation unit and a transition unit are disposed on each of the two circuit boards, so that data transmission between the two circuit boards is implemented through the two transition units. Specifically, the first circuit board may send the service data to the second circuit board through the P1 buses. In other words, service data of different service ports and intermediate frequency ports on the first circuit board may be sent to the second circuit board (for example, sent to the switching unit of the second circuit board) through the P1 buses, and different service ports and intermediate frequency ports on the second circuit board may receive the service data from the first circuit board through the P1 buses (for example, receive the service data from the switching unit of the first circuit board). For example, if P1=1, the service data of different service ports and intermediate frequency ports on the first circuit board is sent to the second circuit board through a same bus, and different service ports and intermediate frequency ports on the second circuit board receive the service data from the first circuit board through the same bus. Therefore, in comparison with a manner in which "service data of different service ports and intermediate frequency ports on the first circuit board is separately sent to the second circuit board through different buses" in FIG. 5C, in this embodiment, P1 may be less than M1+N1+M2+N2, and similarly, P2 may also be less than M1+N1+M2+N2. In other words, P may be less than 2*(M1+ N1+ M2+ N2), thereby effectively reducing a quantity of inter-board cables and cabling space. In addition, in Embodiment 2, dual fed and selective receiving units do not need to be disposed, and the implementation is simple, thereby greatly reducing costs in an active/standby model.

For Embodiment 1 and Embodiment 2, it may be understood that:

(1) In the accompanying drawings provided in embodiments of this application, a connection line between different units indicates that there is a connection relationship between different units or that information can be transmitted between different units. A specific transmission line used to transmit information is not limited in embodiments of this application unless otherwise specified.

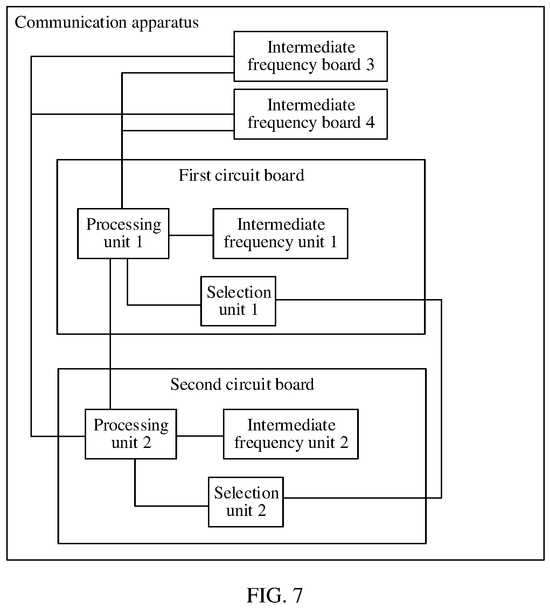

(2) In embodiments of this application, two intermediate frequency boards (or two intermediate frequency units) are used as an example for illustration. In an actual scenario, the communication apparatus may further include more intermediate frequency boards (or intermediate frequency units). For example, the case shown in FIG. 6A is used as an example. The communication apparatus may further include an intermediate frequency board 3 and an intermediate frequency board 4. Refer to FIG. 7. The intermediate frequency board 3 and the intermediate frequency board 4 are independent of the first circuit board and the second circuit board. For connection and communication between the intermediate frequency board 3 and the intermediate frequency board 4 and the first circuit board and the second circuit board, refer to Embodiment 1.

(3) Letters such as N, N1, N2, M1, M2, P1, P2, W, W1, and W2 in embodiments of this application are all positive integers.

(4) The solutions of the control plane and the service plane of the communication apparatus provided in embodiments of this application may be separately and independently implemented, or may be implemented in combination. The service plane and the control plane in different embodiments may also be implemented in combination. For example, the control plane in Embodiment 1 may be implemented in combination with the service plane in Embodiment 2 (that is, the communication apparatus may include the units related to the control plane in Embodiment 1 and the units related to the service plane in Embodiment 2). For another example, the service plane in Embodiment 1 may be implemented in combination with the control plane in Embodiment 2 (that is, the communication apparatus may include the units related to the service plane in Embodiment 1 and the units related to the control plane in Embodiment 2).

In addition, an embodiment of this application provides a microwave communication device. The microwave communication device includes the communication apparatus according to Embodiment 1 or Embodiment 2.

An embodiment of this application provides a microwave communication system. The microwave communication system includes a first communication apparatus and a second communication apparatus. The first communication apparatus is the communication apparatus described in Embodiment 1 or Embodiment 2. The second communication apparatus is configured to: receive a first intermediate frequency signal from an intermediate frequency port of the first communication apparatus, convert the first intermediate frequency signal into a first microwave signal, and send the first microwave signal; or receive a second microwave signal, convert the second microwave signal into a second intermediate frequency signal, and send the second intermediate frequency signal to the first communication apparatus. For example, the first communication apparatus is an IDU, and the second communication apparatus is an ODU. Optionally, the microwave communication system further includes an antenna system connected to the second communication apparatus.

The term "and/or" in embodiments of this application describes an association relationship between associated objects and may indicate three relationships. For example, A and/or B may indicate the following cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

Reference to "an embodiment", "some embodiments", or the like described in this specification means that one or more embodiments of this application include a specific feature, structure, or characteristic described with reference to embodiments. Therefore, statements such as "in an embodiment", "in another embodiment", "in some embodiments", "in some other embodiments", or "in other embodiments" that appear at different places in this specification do not necessarily mean reference to a same embodiment. Instead, the statements mean "one or more but not all of embodiments", unless otherwise specifically emphasized in another manner. The terms "comprise", "include", "have", and their variants all mean "include but are not limited to", unless otherwise specifically emphasized in another manner.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It is clear that a person skilled in the art can make various modifications and variations to this application without departing from the spirit and scope of this application. This application is intended to cover these modifications and variations of this application provided that they fall within the scope of protection defined by the following claims of this application and their equivalent technologies.

**Claims**

1. A communication apparatus, wherein the communication apparatus comprises a first circuit board and a second circuit board;

   the first circuit board comprises N1 service ports, M1 intermediate frequency ports, a first processing unit, and a first switching unit, the second circuit board comprises N2 service ports, M2 intermediate frequency ports, a second processing unit, and a second switching unit, and the M1 intermediate frequency ports or the M2 intermediate frequency ports are configured to connect to a second communication apparatus; and
   the first circuit board is an active circuit board, and the second circuit board is a standby circuit board; or the second circuit board is an active circuit board, and the first circuit board is a standby circuit board, wherein M1, N1, M2, and N2 are all positive integers.

2. The apparatus according to claim 1, wherein the first circuit board and the second circuit board are connected through P buses, the P buses comprise P1 buses and P2 buses, the P1 buses are used by the first circuit board to send service data to the second circuit board, and the P2 buses are used by the second circuit board to send service data to the first circuit board; and P, P1, and P2 are all positive integers, wherein

   $$P \text{ is less than } 2*(M1+N1+M2+N2).$$

3. The apparatus according to claim 2, wherein the P buses are serial buses.

4. The apparatus according to claim 2 or 3, wherein a transmission bandwidth of the P1 buses is greater than or equal to a sum of transmission bandwidths corresponding to the N1 service ports and the M1 intermediate frequency ports; and/or a transmission bandwidth of the P2 buses is greater than or equal to a sum of transmission bandwidths corresponding to the N2 service ports and the M2 intermediate frequency ports.

5. The apparatus according to any one of claims 2 to 4, wherein the second circuit board comprises a transition unit;

   the transition unit is configured to: receive first service data, and if it is determined that the first circuit board is an active circuit board and the second circuit board is a standby circuit board, send the first service data to the first circuit board through the P2 buses, wherein the first service data comprises service data from the N2 service ports, and/or service data from the M2 intermediate frequency ports.

6. The apparatus according to claim 5, wherein the first switching unit is configured to: receive the first service data, and if it is determined that a router port of the first service data is a port on the second circuit board, send the first service data to the second circuit board through the P1 buses.

7. The apparatus according to claim 5 or 6, wherein the second circuit board further comprises a first aggregation unit and/or a second aggregation unit;

   the first aggregation unit is configured to: aggregate the service data from the N2 service ports and send aggregated service data to the transition unit; and
   the second aggregation unit is configured to: aggregate the service data from the M2 intermediate frequency ports and send aggregated service data to the transition unit.

8. The apparatus according to any one of claims 1 to 7, wherein the first circuit board and the second circuit board are further connected through K buses, and the K buses are used for communication between the first processing unit and the second processing unit, wherein K is a positive integer.

9. The apparatus according to claim 8, wherein the K buses are serial buses.

10. The apparatus according to claim 8 or 9, wherein when the first circuit board is an active circuit board and the second circuit board is a standby circuit board, the K buses are used by the first processing unit to send a management command to the second processing unit; and

the management command indicates a first-type parameter and/or a second-type parameter of the M2 intermediate frequency ports, wherein the first-type parameter of the M2 intermediate frequency ports comprises at least one of the following: a modulation scheme corresponding to the M2 intermediate frequency ports, a modulation bandwidth corresponding to the M2 intermediate frequency ports, and a transmit power of the M2 intermediate frequency ports; and

the second-type parameter of the M2 intermediate frequency ports comprises an operating state of the M2 intermediate frequency ports.

11. The apparatus according to any one of claims 1 to 7, wherein the first circuit board and the second circuit board are further connected through W buses, and the W buses comprise W1 buses and W2 buses, wherein W, W1, and W2 are all positive integers; and when the first circuit board is an active circuit board and the second circuit board is a standby circuit board, the W1 buses are used by the first processing unit to manage the M2 intermediate frequency ports; or when the second circuit board is an active circuit board and the first circuit board is a standby circuit board, the W2 buses are used by the second processing unit to manage the M1 intermediate frequency ports.

12. The apparatus according to claim 11, wherein the W buses are parallel buses.

13. A microwave communication device, wherein the microwave communication device comprises the communication apparatus according to any one of claims 1 to 12.

14. A microwave communication system, wherein the microwave communication system comprises a first communication apparatus and a second communication apparatus, wherein the first communication apparatus is the communication apparatus according to any one of claims 1 to 12; and the second communication apparatus is configured to: receive a first intermediate frequency signal from an intermediate frequency port of the first communication apparatus, convert the first intermediate frequency signal into a first microwave signal, and send the first microwave signal; or receive a second microwave signal, convert the second microwave signal into a second intermediate frequency signal, and send the second intermediate frequency signal to the first communication apparatus.

Serial bus

Apparatus
A

Apparatus
B

FIG. 1A

Parallel bus

Apparatus
C

Apparatus
D

FIG. 1B

First communication
apparatus (IDU)

Second
communication
apparatus 1 (ODU)

Antenna
system 1

Second
communication
apparatus 2 (ODU)

Antenna
system 2

FIG. 2

FIG. 3

EP 4 757 190 A1

Communication apparatus

Main control board 1

Processing unit 1

Selection unit 1

Main control board 2

Processing unit 2

Selection unit 2

Intermediate frequency board 1

Intermediate frequency unit 1

Selection unit 3

Intermediate frequency board 2

Intermediate frequency unit 2

Selection unit 4

FIG. 4A

FIG. 4B

FIG. 4C

FIG. 5A

**Communication apparatus**

**First circuit board**

| Service unit 1 | — | Dual fed and selective receiving unit 1 | — | Switching unit 1 |

Dual fed and selective receiving unit 1 — Selection unit 1

Switching unit 1 → Dual fed and selective receiving unit 3 — Intermediate frequency unit 1

Dual fed and selective receiving unit 3 — Selection unit 3

**Second circuit board**

| Service unit 2 | — | Dual fed and selective receiving unit 2 | — | Switching unit 2 |

Dual fed and selective receiving unit 2 — Selection unit 2

Switching unit 2 → Dual fed and selective receiving unit 4 — Intermediate frequency unit 2

Dual fed and selective receiving unit 4 — Selection unit 4

FIG. 5B

EP 4 757 190 A1

Communication apparatus

First circuit board

| Service port 1a | Dual fed and selective receiving unit 1a |
| Service port 1b | Dual fed and selective receiving unit 1b |
| Service port 1c | Dual fed and selective receiving unit 1c |
| Service port 1d | Dual fed and selective receiving unit 1d |

Switching unit 1

Dual fed and selective receiving unit 3a — Intermediate frequency unit 1a

Dual fed and selective receiving unit 3b — Intermediate frequency unit 1b

Second circuit board

| Service port 2a | Dual fed and selective receiving unit 2a |
| Service port 2b | Dual fed and selective receiving unit 2b |
| Service port 2c | Dual fed and selective receiving unit 2c |
| Service port 2d | Dual fed and selective receiving unit 2d |

Switching unit 2

Dual fed and selective receiving unit 4a — Intermediate frequency unit 2a

Dual fed and selective receiving unit 4b — Intermediate frequency unit 2b

FIG. 5C

Communication apparatus

First circuit board

Processing unit 1 — Intermediate frequency unit 1

Selection unit 1

Second circuit board

Processing unit 2 — Intermediate frequency unit 2

Selection unit 2

FIG. 6A

First circuit board

Service unit 1 — Aggregation unit 1 — Switching unit 1 — Aggregation unit 3 — Intermediate frequency unit 1

Transition unit 1 — Selection unit 1

Second circuit board

Transition unit 2 — Selection unit 2

Service unit 2 — Aggregation unit 2 — Switching unit 2 — Aggregation unit 4 — Intermediate frequency unit 2

FIG. 6B

FIG. 6C

FIG. 6D

FIG. 7

## INTERNATIONAL SEARCH REPORT

| International application No. |
|---|
| **PCT/CN2024/112861** |

**A.    CLASSIFICATION OF SUBJECT MATTER**

H04B 1/40(2015.01)i

According to International Patent Classification (IPC) or to both national classification and IPC

**B.    FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

ENTXT, DWPI, CNTXT, ENTXTC: 备, 备份, 备用, 集成, 交换, 室内单元, 微波, 业务, 中频, 主, 主备, 主控板, IDU, indoor unit, backup, circuit board, master, slave, service port

**C.    DOCUMENTS CONSIDERED TO BE RELEVANT**

| Category* | Citation of document, with indication, where appropriate, of the relevant passages | Relevant to claim No. |
|---|---|---|
| X | WO 2022021253 A1 (HUAWEI TECHNOLOGIES CO., LTD.) 03 February 2022 (2022-02-03)<br>description, page 10 paragraph 7-page 12 paragraph 1, page 27 paragraph 2, page 29 paragraphs 6-7, and figures 2-3 | 1-14 |
| A | CN 1878012 A (HUAWEI TECHNOLOGIES CO., LTD.) 13 December 2006 (2006-12-13)<br>entire document | 1-14 |
| A | CN 105530205 A (ZTE CORP.) 27 April 2016 (2016-04-27)<br>entire document | 1-14 |
| A | CN 110267285 A (COMBA TELECOM SYSTEMS (CHINA) CO., LTD. et al.) 20 September 2019 (2019-09-20)<br>entire document | 1-14 |

☐ Further documents are listed in the continuation of Box C.        ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 October 2024** | **23 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/112861**

| Patent document cited in search report | | | Publication date (day/month/year) | Patent family member(s) | | | Publication date (day/month/year) |
|---|---|---|---|---|---|---|---|
| WO | 2022021253 | A1 | 03 February 2022 | EP | 4184985 | A1 | 24 May 2023 |
| | | | | IN | 202317009615 | A | 27 October 2023 |
| CN | 1878012 | A | 13 December 2006 | WO | 2006131059 | A1 | 14 December 2006 |
| CN | 105530205 | A | 27 April 2016 | None | | | |
| CN | 110267285 | A | 20 September 2019 | WO | 2020258744 | A1 | 30 December 2020 |

Form PCT/ISA/210 (patent family annex) (July 2022)

**EP 4 757 190 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311099451